**Europäisches Patentamt**

**European Patent Office**

**Office européen des brevets**

(19)

(11) Veröffentlichungsnummer: **0 192 069**
**B1**

(12) # EUROPÄISCHE PATENTSCHRIFT

(45) Veröffentlichungstag der Patentschrift:
**24.05.89**

(51) Int. Cl.⁴: **H04L 11/00**

(21) Anmeldenummer: **86100785.4**

(22) Anmeldetag: **22.01.86**

(54) Verfahren zum Übertragen von Datensignalen.

(30) Priorität: **20.02.85 DE 3505874**

(43) Veröffentlichungstag der Anmeldung:
**27.08.86 Patentblatt 86/35**

(45) Bekanntmachung des Hinweises auf die Patenterteilung:
**24.05.89 Patentblatt 89/21**

(84) Benannte Vertragsstaaten:
**AT DE IT NL**

(56) Entgegenhaltungen:
**DE-A- 2 912 652**
**DE-A- 3 431 794**

**PATENT ABSTRACTS OF JAPAN, Band 7,**
**Nr. 103 (E-173)[1248], 6. Mai 1983; &**
**JP-A-58 24 254 (NIPPON DENSHIN DENWA**
**KOSHA) 14-02-1983**
**PATENT ABSTRACTS OF JAPAN, Band 7,**
**Nr. 88 (E-170)[1233], 12. April 1983; &**
**JP-A-58 13 048 (NIPPON DENSHIN DENWA**
**KOSHA) 25-01-1983**

(73) Patentinhaber: **Siemens Aktiengesellschaft Berlin und München, Wittelsbacherplatz 2, D-8000 München 2(DE)**

(72) Erfinder: **Franz, Dietmar, Dipl.-Ing. (FH), Edelweissstrasse 66, D-8039 Puchheim(DE)**

## Beschreibung

Die Erfindung betrifft ein Verfahren zum Übertragen von Datensignalen zwischen an einer Datenvermittlungsanlage angeschlossenen Teilnehmerstellen bzw. Übertragungsleitungen und einer ebenfalls an der Datenvermittlungsanlage über eine Mehrzahl von Verbindungsleitungen angeschlossenen Signalbehandlungseinrichtung mit einer der Anzahl der Verbindungsleitungen entsprechenden Anzahl von Übertragungskanälen, wobei die über einen der betreffenden Übertragungskanäle zu der Signalbehandlungseinrichtung hin übertragenen zu behandelnden Datensignale in einen für die Aufnahme von Datensignalen dem betreffenden Übertragungskanal gerade zugeordneten Speicherbereich eines eine Mehrzahl von den Übertragungskanälen wahlfrei zuteilbaren Speicherbereichen aufweisenden Datensignalspeichers übernommen werden und nach dieser Übernahme dem betreffenden Übertragungskanal für eine erneute Übernahme zu behandelnder Datensignale ein weiterer Speicherbereich zugeteilt wird und wobei die zunächst in einem Speicherbereich des Datensignalspeichers zwischengespeicherten Datensignale nach einer Behandlung über mindestens einen Übertragungskanal weitergeleitet werden.

Ein derartiges Verfahren zum Übertragen von Datensignalen ist bereits beschrieben worden (DE-A 3 431 794, veröffentlicht 12.9.1985). Bei diesem bekannten Verfahren wird nach der Übernahme von über einen Übertragungskanal übertragenen Datensignalen in einen dem betreffenden Übertragungskanal gerade zugeteilten Speicherbereich des Datensignalspeichers ein Freimeldesignal über einen zentralen Signalisierungskanal zu der Datenvermittlungsanlage hin übertragen. Auf ein derartiges Freimeldesignal hin wird in der Datenvermittlungsanlage der für die gerade erwähnte Datensignalübertragung belegte Übertragungskanal für eine erneute Datensignalübertragung wieder freigegeben. Auf diese Weise wird erreicht, daß die einzelnen Übertragungskanäle bereits vor der Behandlung und Weiterleitung der in die Signalbehandlungseinrichtung aufgenommenen Datensignale für weitere Datensignalübertragungen von bzw. zu der Signalbehandlungseinrichtung hin zu Verfügung stehen.

Bei dem bekannten Verfahren zum Übertragen von Datensignalen wird nun zwar die Belegungsdauer der einzelnen Übertragungskanäle der Signalbehandlungseinrichtung für eine Signalübertragung in Richtung zu der Signalbehandlungseinrichtung hin gering gehalten. Es kann nun aber auch der Fall eintreten, daß die zu behandelnden Datensignale von der Signalbehandlungseinrichtung her nicht weitergeleitet werden können. Dies tritt beispielsweise dann ein, wenn eine Teilnehmerstelle, zu der Datensignale hin zu übertragen sind, aufgrund einer gerade vorliegenden Belegung nicht erreichbar ist. Eine solche Nichtweiterleitbarkeit von Datensignalen bewirkt einerseits durch ständige Belegung von Speicherbereichen des Datensignalspeichers eine Reduzierung der in der Signalbehandlungseinrichtung zur Verfügung stehenden Speicherkapazität. Andererseits werden aber auch Übertragungskanäle belegt, wenn von der Signalbehandlungseinrichtung her wiederholt versucht wird, die zunächst in ihr gespeicherten Datensignale an die in Frage kommenden Teilnehmerstellen weiterzuleiten.

Handelt es sich bei der Signalbehandlungseinrichtung um eine sogenannte "Mail-Box", in welcher Nachrichtensignale in Form von Datensignalen bis zum Abruf durch eine Teilnehmerstelle zwischengespeichert werden, so reduziert sich die insgesamt zur Verfügung stehende Speicherkapazität dadurch, daß in der Signalbehandlungseinrichtung bereitgestellte Nachrichtensignale nicht abgerufen werden.

Es ist nun Aufgabe der vorliegenden Erfindung, einen Weg zu zeigen, wie bei einem Verfahren der eingangs genannten Art eine zu starke Reduzierung der in der Signalbehandlungseinrichtung vorhandenen Speicherkapazität aufgrund von nicht absetzbaren Datensignalen vermieden werden kann.

Gelöst wird die vorstehend aufgezeigte Aufgabe bei einem Verfahren der eingangs genannten Art erfindungsgemäß dadurch, daß von der Signalbehandlungseinrichtung her über einen für sämtliche Übertragungskanäle zur Verfügung stehenden Sonderkanal ein Meldesignal zu der Datenvermittlungsanlage hin übertragen wird, falls in einem Speicherbereich des Datensignalspeichers gespeicherte Datensignale nicht weitergeleitet werden können, und daß mit der Abgabe des Meldesignals der bis dahin durch die nicht weiterleitbaren Datensignale belegte Speicherbereich freigegeben wird.

Die Erfindung bringt den Vorteil mit sich, daß einerseits Speicherbereiche des Datensignalspeichers, die durch nicht weiterleitbare Datensignale belegt sind, nach einer vorgegebenen Zeit von der Signalbehandlungseinrichtung selbst wieder freigegeben werden können. Gesonderte Steuervorgänge für die Freigabe von Speicherbereichen des Datensignalspeichers der Signalbehandlungseinrichtung sind in der mit dieser verbundenen Datenvermittlungsanlage nicht erforderlich. Ein weiterer Vorteil besteht darin, daß Meldesignale zu der Datenvermittlungsanlage hin über einen Sonderkanal übertragen werden, so daß für die Abgabe dieser Meldesignale die einzelnen Übertragungskanäle nicht in Anspruch genommen werden müssen, d. h. daß diese ebenfalls wieder für weitere Verbindungen zur Verfügung stehen.

Vorzugsweise wird für die Abgabe eines Meldesignals von der Signalbehandlungseinrichtung her über den Sonderkanal eine gesonderte Verbindung zu der Datenvermittlungsanlage hin aufgebaut. Auf diese Weise können Meldsignale mit Hilfe von in der Signalbehandlungseinrichtung und in der Datenvermittlungsanlage ablaufenden Steuerungsvorgängen übertragen werden, wie sie auch für die Übertragung von zu behandelnden Datensignalen zur Verfügung stehen. Zusätzliche Steuerungsabläufe für die Übertragung von Meldesignalen sind somit nicht erforderlich.

Die Abgabe eines Meldesignals von der Signalbehandlungseinrichtung her kann in der Weise erfolgen, daß über den Sonderkanal eine über die Datenvermittlungsanlage verlaufende gesonderte Verbindung zu einer zu einem Überlaufplatz gehörenden Teilnehmerstelle aufgebaut wird und daß dem Meldesignal die dieses Meldesignal bewirkenden nicht weiterleitbaren Datensignale sowie eine spätere Weiterleitung dieser Datensignale durch die zu dem Überlaufplatz gehörende Teilnehmerstelle ermöglichende Informationssignale beigefügt werden. Ein derartiges Verfahren bringt den Vorteil mit sich, daß die in einem Speicherbereich des Datensignalspeichers der Signalbehandlungseinrichtung gespeicherten, jedoch nicht weiterleitbaren Datensignale bei einer Freigabe des betreffenden Speicherbereiches nicht verloren gehen. Diese Datensignale können vielmehr nach einer Übertragung zu dem Überlaufplatz hin von diesem zu der in Frage kommenden Teilnehmerstelle hin übertragen werden, sobald diese Teilnehmerstelle von dem Überlaufplatz her erreichbar ist. Vorteilhaft anwendbar ist ein solches Verfahren beispielsweise bei einer Datensignalübertragung zwischen einer an der Datenvermittlungsanlage angeschlossenen Telex-Teilnehmerstelle und einer ebenfalls an der Datenvermittlungsanlage angeschlossenen Teletex-Teilnehmerstelle. Eine für eine solche Signalübertragung erforderliche Signalumsetzung erfolgt dabei mit Hilfe einer als Signalumsetzer wirkenden Signalbehandlungseinrichtung. Nach der Abgabe der an eine Teletex-Teilnehmerstelle zu übertragenden Datensignale stehen diese Datensignale im allgemeinen in der Telex-Teilnehmerstelle nicht mehr zur Verfügung. Bei Anwendung des erfindungsgemäßen Verfahrens gehen jedoch Datensignale, die von dem Signalumsetzer nicht weiterleitbar sind, nicht verloren, sondern sie stehen in dem Überlaufplatz noch zur Verfügung.

Die Abgabe eines Meldesignals von der Signalbehandlungseinrichtung kann auch in der Weise erfolgen, daß über den Sonderkanal eine über die Datenvermittlungsanlage verlaufende gesonderte Verbindung zu derjenigen Teilnehmerstelle bzw. Übertragungsleitung hin aufgebaut wird, von der die zu behandelnden Datensignale ursprünglich abgegeben worden sind. Auf diese Weise erhält die betreffende Teilnehmerstelle eine Mitteilung über die Nichtweiterleitbarkeit der von ihr abgegebenen Datensignale. Das erfindungsgemäße Verfahren ist vorteilhaft dann einsetzbar, wenn die von einer Teilnehmerstelle abgegebenen Datensignale nach der Abgabe noch zur Verfügung stehen, so daß diese Datensignale erneut zu der Signalbehandlungseinrichtung hin übertragen werden können. Als Beispiel für eine Teilnehmerstelle, bei der im allgemeinen Datensignale auch nach der Übertragung noch zur Verfügung stehen, sei hier eine Teletex-Teilnehmerstelle genannt.

Ein von der Signalbehandlungseinrichtung abzugebendes Meldesignal kann entweder während der Datenübertragungsphase der Verbindung oder im Zuge des Verbindungsaufbaus in Form eines Dienstsignals übertragen werden. Ersteres ist dann zweckmäßig, wenn zusammen mit dem Meldesignal auch die nicht weiterleitbaren Datensignale sowie eine spätere Weiterleitung dieser Datensignale ermöglichende Informationssignale übertragen werden. Sind dagegen lediglich Meldesignale ohne zusätzliche Nachrichtensignale zu übertragen, ist es zweckmäßig, diese im Zuge des Verbindungsaufbaus zu übertragen.

Vorzugsweise wird erst nach der Durchführung einer vorgegebenen Anzahl von Versuchen des Weiterleitens von in einem Speicherbereich des Datensignalspeichers gespeicherten Datensignalen ein Meldesignal von der Signalbehandlungseinrichtung abgegeben. Hierdurch ergibt sich der Vorteil, daß ein Meldesignal nicht bereits bei einer kurzzeitigen Störung in der für den Empfang von Datensignalen vorgesehenen Teilnehmerstelle abgegeben wird, sondern erst dann, wenn mit einiger Wahrscheinlichkeit darauf geschlossen werden kann, daß die in Frage kommende Teilnehmerstelle nicht erreichbar ist.

Anhand einer Zeichnung wird die Erfindung nachstehend am Beispiel einer Signalumsetzeinrichtung näher erläutert. Es sei hier aber bereits darauf hingewiesen, daß eine Anwendung der Erfindung nicht auf eine derartige Signalumsetzeinrichtung beschränkt ist. Vielmehr ist das Verfahren gemäß der hier vorliegenden Erfindung allgemein bei Anschluß einer Signalbehandlungseinrichtung an eine Datenvermittlungsanlage anwendbar, wenn diese Signalbehandlungseinrichtung die zu behandelnden Datensignale vor einer Weiterleitung zunächst zwischenspeichert. Eine Behandlung von Datensignalen kann dabei beispielsweise in einer Umsetzung, einer Weiterleitung an eine vorgegebene Anzahl von Teilnehmerstellen oder auch in einer Zwischenspeicherung bis zum Abruf durch eine autorisierte Person bestehen. Derartige Signalbehandlungseinrichtungen werden auch allgemein als Sende- und Empfangshilfen bezeichnet. Als Beispiele für derartige Sende- und Empfangshilfen seien hier genannt ein Signalumsetzer, eine Rundsendeeinrichtung, die an eine Mehrzahl von Teilnehmerstellen weiterzuleitende Datensignale zugeführt erhält, und eine Einrichtung für den elektronischen Briefdienst (Mail-Box), in der z. B. von autorisierten Personen abrufbare Nachrichten (Datensignale) zwischengespeichert sind.

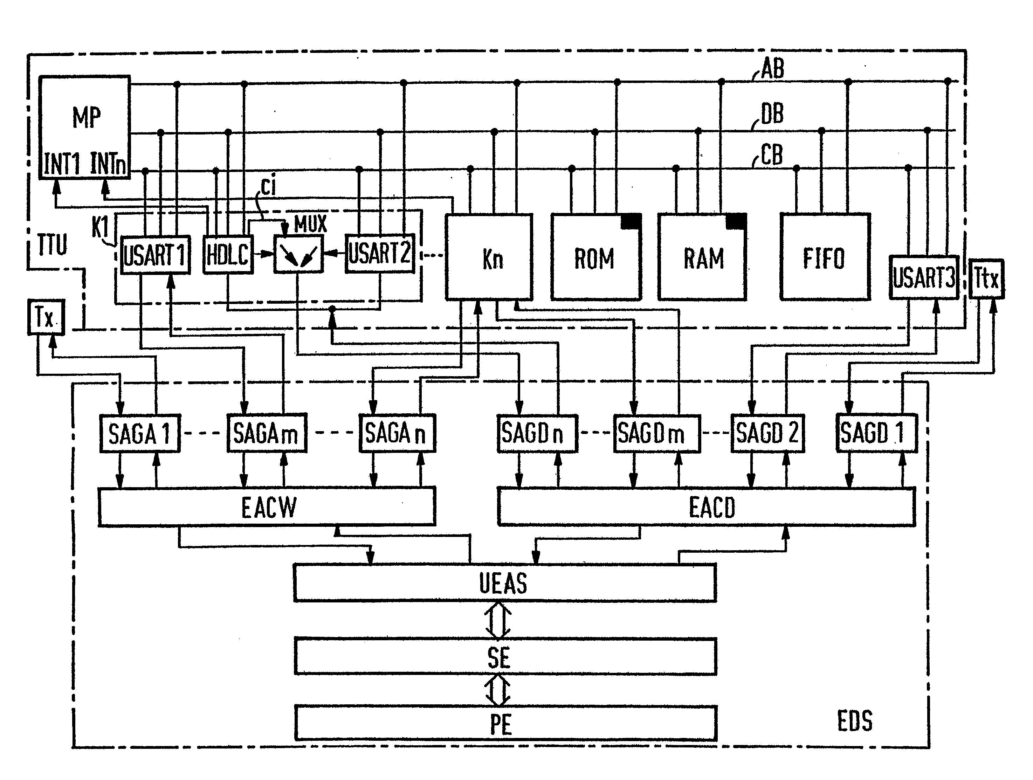

Es wird nun zunächst der Aufbau der in der gerade genannten Zeichnung dargestellten Schaltungsanordnung beschrieben. So ist in der Zeichnung ausschnittweise eine Datenvermittlungsanlage EDS dargestellt. Über diese sind allgemein Datensignale übertragbar, unter die beispielsweise Fernschreibsignale oder auch Sprachsignale in digital kodierter Form fallen. Zur Verdeutlichung wird deshalb im folgenden die Datenvermittlungsanlage EDS als Fernschreib- und Datenvermittlungsanlage bezeichnet.

Von der Fernschreib- und Datenvermittlungsanlage EDS sind lediglich zu einer ersten Gruppe von Anschlußschaltungen gehörende Anschlußschaltungen SAGA1, SAGAm, SAGAn, zu einer zweiten Gruppe von Anschlußschaltungen gehörende Anschlußschaltungen SAGD1, SAGD2, SAGDm und SAGDn, den einzelnen Gruppen von Anschlußschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen (SAGA1 bis SAGAn) dienen dazu, digitale Datensignale polaritätswechselweise zu verarbeiten. Die mit dem anderen Eingabe-/Ausgabe-Codewandler EACD verbundenen Anschlußschaltungen dienen dagegen zur Verarbeitung von sogenannten Bitgruppen. Diese Bitgruppen sind jeweils eine Mehrzahl von Bits, beispielsweise 8 Bits, umfassende digitale Datensignale, die auch als Envelopes bezeichnet werden. Die Aufgabe dieser Eingabe-/Ausgabe-Codewandler besteht unter anderem darin, über die einzelnen Anschlußschaltungen zugeführte Signale zu dem eigentlichen Verarbeitungsteil der Fernschreib- und Datenvermittlungsanlage EDS weiterzuleiten bzw. von diesem Verarbeitungsteil her über die Anschlußschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die bestimmte, ihr von der Übertragungsablaufsteuerung zugeführte Signale an die Programmsteuereinheit PE weiterleitet. Außerdem gibt die Speichereinheit SE die ihr von der Programmsteuereinheit zugeführten Signale an die Übertragungsablaufsteuerung UEAS ab.

Von den Polaritätswechsel verarbeitenden Anschlußschaltungen sind einige mit Teilnehmereinrichtungen verbunden, welche digitale Signale mit einer ersten Datenübertragungsprozedur abgeben bzw. aufnehmen. Bei diesen Teilnehmereinrichtungen mag es sich um übliche Fernschreib- bzw. Telex-Endgeräte handeln, von denen in der Zeichnung eines mit Tx bezeichnet ist. Diese Telex-Endgeräte mögen mit einer Datenübertragungsrate von 50 Bd und unter Ausnutzung des internationalen Telegraphenalphabets Nr. 2 arbeiten, also mit einem Start-Stop-Datenformat. Das Telex-Endgerät Tx ist dabei beispielsweise über eine Leitungsanordnung an der Anschlußschaltung SAGA1 angeschlossen. Eine solche Anschlußschaltung ermöglicht im allgemeinen den Anschluß einer Mehrzahl von Telex-Endgeräten. Zur Vereinfachung der Zeichnung ist jedoch lediglich ein Anschluß angedeutet. Diese Vereinfachung gilt im übrigen auch für die anderen in der Zeichnung dargestellten Anschlußschaltungen.

Mit einigen der digitale Datensignale in Form von Bitgruppen bzw. Envelopes verarbeitenden Anschlußschaltungen sind Teilnehmereinrichtungen verbunden, die digitale Nachrichtensignale mit einer zweiten Datenübertragungsprozedur abgeben bzw. aufnehmen, und zwar seriell in Form von Bitgruppen bzw. Envelopes. Bei diesen Teilnehmereinrichtungen mag es sich um sogenannte Bürofernschreibstationen handeln, die auch als Teletex-Endgeräte bezeichnet werden. In der Zeichnung ist ein derartiges Teletex-Endgerät mit Ttx bezeichnet. Dieses Teletex-Endgerät ist an der Anschlußschaltung SAGD1 angeschlossen. Auch für diese Anschlußschaltung, gilt wieder, daß an ihr noch weitere Teletex-Endgeräte angeschlossen sein können. Bezüglich der Teletex-Endgeräte sei angemerkt, daß diese beispielsweise seriell auftretende digitale Datensignale entsprechend dem internationalen Alphabet IA Nr. 5 mit einer Datenübertragungsrate von beispielsweise 2400 bit/s abgeben und aufnehmen können, und zwar als synchrone Datensignale.

An die genannten Anschlußschaltungen können auch anstelle von Telex-Endgeräten bzw. Teletex-Endgeräten Übertragungsleitungen angeschlossen sein, die die Fernschreib- und Datenvermittlungsanlage EDS mit weiteren Datenvermittlungsanlagen verbinden.

Mit der in der Zeichnung dargestellten Fernschreib- und Datenvermittlungsanlage EDS ist als Signalbehandlungseinrichtung eine Signalumsetzeinrichtung TTU verbunden. Diese Signalumsetzeinrichtung dient bei der Datensignalübertragung zwischen Telex-Endgeräten und Teletex-Endgeräten zur Datenübertragungsprozedur- und Datenformatumsetzung. Die Signalumsetzeinrichtung weist dazu einen Mikroprozessor MP auf, der an ein Busleitungssystem angeschlossen ist. Dieses Busleitungssystem besteht aus einem Adreßbus AB, einem Datenbus DB und einem Steuerbus CB. An dieses Busleitungssystem ist eine Mehrzahl von Übertragungskanälen K1 bis Kn angeschlossen. Von diesen Übertragungskanälen sind in der Zeichnung lediglich die Übertragungskanäle K1 und Kn dargestellt. Der interne Aufbau dieser Übertragungskanäle, der in der Zeichnung lediglich für den Übertragungskanal K1 angegeben ist, entspricht dem internen Aufbau der in der DE-OS 29 12 652 beschriebenen Umsetzeinrichtung. So weist jeder der Übertragungskanäle zwei Anschlußseiten auf. Eine der Anschlußseiten wird durch eine Schnittstellenschaltung USART1 gebildet, die den jeweiligen Übertragungskanal eingangs- und ausgangsseitig mit einer zu der ersten Gruppe von Anschlußschaltungen der Fernschreib- und Datenvermittlungsanlage EDS gehörenden Anschlußschaltung verbindet. In der Zeichnung ist der Übertragungskanal K1 über diese Schnittstellenschaltung mit der Anschlußschaltung SAGAm und der Übertragungskanal Kn mit der Anschlußschaltung SAGAn verbunden.

Die zweite Anschlußseite jedes der Übertragungskanäle besteht aus einer Schnittstellenschaltung USART2, einer Datenübertragungsschaltung HDLC und einer Datenweiche MUX. Die Schnittstellenschaltung und die Datenübertragungsschaltung sind dabei mit ihren Eingängen gemeinsam am Ausgang einer zu der zweiten Gruppe von Anschlußschaltungen der Fernschreib- und Datenvermittlungsanlage EDS gehörenden Anschlußschaltung angeschlossen. In der Zeichnung sind die genannten Schaltungen des Übertragungskanals K1 mit dem Ausgang der Anschlußschaltung SAGDn verbunden. In entsprechender Weise ist der Übertragungskanal Kn an den Ausgang der Anschlußschaltung SAGDm angeschlossen. Eingangsseitig steht die Anschlußschaltung SAGDn mit der Datenweiche MUX des Übertragungskanals K1 in Verbindung. In entsprechender Weise ist der Eingang der Anschlußschaltung SAGDm mit der in dem Übertragungskanal Kn vorhandenen Datenweiche verbunden.

Die Datenweiche eines Übertragungskanals ist mit ihren Eingängen an einen Ausgang der Schnittstellenschaltung USART2 bzw. einen Ausgang der Datenübertragungsschaltung HDLC des betreffenden Übertragungskanals angeschlossen. Mit einem Steuereingang ci ist die Datenweiche MUX zusätzlich an einem Steuerausgang der Datenübertragungsschaltung HDLC angeschlossen. Je nachdem, welches Steuersignal dem Steuereingang der Datenweiche zugeführt wird, verbindet diese ihren Ausgang entweder mit dem Ausgang der Schnittstellenschaltung USART2 oder mit dem Ausgang der Datenübertragungsschaltung HDLC.

Wie bereits erwähnt, sind die Übertragungskanäle K1 bis Kn jeweils mit ihren Schnittstellenschaltungen bzw.ihrer Datenübertragungsschaltung über das interne Busleitungssystem der Signalumsetzeinrichtung TTU mit dem Mikroprozessor MP verbunden. Über dieses Busleitungssystem erfolgt die Signalübertragung von bzw. zu dem Mikroprozessor hin. Der Mikroprozessor ist außerdem mit seinen Unterbrechungseingängen INT1 bis INTn an jeweils einen Steuerausgang der in den Übertragungskanälen vorhandenen Datenübertragungsschaltungen HDLC angeschlossen. Über diese Verbindungen kann der Mikroprozessor MP in seinem Betrieb von den Datenübertragungsschaltungen her veranlaßt werden, die Abwicklung von Datenübertragungsvorgängen zu steuern.

An das Busleitungssystem der Signalumsetzeinrichtung TTU ist außerdem eine Speicheranordnung mit entsprechenden Anschlüssen angeschlossen. Zu dieser Speicheranordnung gehört ein Festwertspeicher ROM, in dem die für den Betrieb der Signalumsetzeinrichtung erforderliche Befehlsfolge für den Mikroprozessor gespeichert ist. Daneben ist ein Speicher RAM mit wahlfreiem Zugriff vorgesehen. Bei diesem Speicher handelt es sich um einen Schreib-/Lese-Speicher. Er dient, wie im folgenden noch näher erläutert werden wird, zur Zwischenspeicherung von Datensignalen, die bei einer Signalübertragung zwischen Telex-Endgeräten und Teletex-Endgeräten umzusetzen sind. Schließlich gehört zu der Speicheranordnung noch ein Durchlaufspeicher FIFO. In diesem Durchlaufspeicher werden, wie im folgenden noch erläutert werden wird, von den einzelnen Übertragungskanälen K1 bis Kn an die Fernschreib- und Datenvermittlungsanlage EDS abzugebende Meldesignale zwischengespeichert.

Mit dem bereits erwähnten Busleitungssystem der Signalumsetzeinrichtung TTU ist schließlich noch eine weitere Schnittstellenschaltung USART3 verbunden. Über diese Schnittstellenschaltung werden u.a.die Übertragungskanäle betreffende Meldesignale zu der Fernschreib-und Datenvermittlungsanlage hin übertragen. Die Schnittstellenschaltung ist hierfür mit einer zu der zweiten Gruppe von Anschlußschaltungen der Fernschreib- und Datenvermittlungsanlage gehörenden Anschlußschaltung verbunden. In der Zeichnung ist diese Anschlußschaltung mit SAGD2 bezeichnet.

Nachdem zuvor der Aufbau der in der Zeichnung dargestellten Schaltungsanordnung erläutert worden ist, sei nunmehr die Arbeitsweise dieser Schaltungsanordnung näher betrachtet. Hierzu wird zunächst davon ausgegangen, daß digitale Datensignale von dem Teletex-Endgerät Ttx aus zu dem Telex-Endgerät Tx zu übertragen sind. Die hierzu für einen Verbindungsaufbau erforderlichen Kommunikationen zwischen dem Teletex-Endgerät und der Fernschreib- und Datenvermittlungsanlage EDS werden entsprechend der CCITT-Empfehlung X.21 durchgeführt. Aus den im Zuge des Verbindungsaufbaues von dem Teletex-Endgerät her übertragenen Wählzeichen geht hervor, daß eine Verbindung zu einem Telex-Endgerät gewünscht ist, d.h. daß eine Umsetzung der Übertragungsprozedur vorzunehmen ist. Solche Wählzeichen werden in der Fernschreib- und Datenvermittlungsanlage EDS als solche erkannt. Auf die Funktionen der Fernschreib- und Datenvermittlungsanlage wird hier nicht näher eingegangen. Diese Funktionen sind bereits hinlänglich bekannt (siehe beispielsweise "Siemens-Zeitschrift", Heft 2, 1977, Seiten 82 bis 87).

Bei Erkennen von Verbindungswünschen belegt die Fernschreib- und Datenvermittlungsanlage EDS einen bis dahin freien Übertragungskanal der Signalumsetzeinrichtung TTU, z.B. den Übertragungskanal K1.Für die Speicherung der Freizustände bzw. Belegtzustände der Übertragungskanäle kann beispielsweise in der Fernschreib- und Datenvermittlungsanlage eine Schaltungsanordnung vorgesehen sein, wie sie bereits in der DE-OS 30 30 887 beschrieben worden ist. Bei Verwendung einer solchen Schaltungsanordnung ist jedem Übertragungskanal eine Registerzelle eines Registers zugeordnet, in welche ein Freizustandssignal bzw. ein Belegtzustandssignal eintragbar ist. Befindet der Übertragungskanal sich beispielsweise in einem Freizustand, so wird bei Belegung dieses Übertragungskanals das in der zugehörigen Registerzelle des gerade erwähnten Registers eingetragene Freizustandssignal in ein Belegtzustandssignal geändert. Dieses Belegtzustandssignal bewirkt, daß der betreffende Übertragungskanal nicht in weitere Verbindungen einbezogen werden kann.

Nach der Belegung des Übertragungskanals K1 leitet die Fernschreib- und Datenvermittlungsanlage EDS die für den weiteren Verbindungsaufbau erforderlichen Signalisierungsinformationen (z.B. Wählzeichen) an den Übertragungskanal K1 weiter. Die Weiterleitung solcher Signalisierungsinformationen erfolgt dabei gemäß der CCITT-Empfehlung X.71, d.h. es wird eine sogenannte Zwischenamtssignalisierung durchgeführt.

Nach einem erfolgten Aufbau der Verbindung zwischen dem Übertragungskanal K1 und dem Teletex-Endgerät beginnt das Teletex-Endgerät Ttx mit der Übertragung der Datensignale über die Fernschreib- und Datenvermittlungsanlage zu dem Übertragungskanal K1 hin. Diese Datensignale werden in einen dem Übertragungskanal K1 gerade zugeteilten Speicherbereich des Schreib-/Lese-Speichers RAM übernommen. In diesen Speicherbereich werden außerdem Angaben bezüglich des Senders und Empfängers dieser Datensignale, hier der Endgeräte Ttx und Tx, eingetragen. Diese Angaben ergeben sich aus den dem Übertragungskanal K1 übergebenen Signalisierungsinformationen.

Der Schreib-/Lese-Speicher RAM der Signalumsetzeinrichtung TTU weist eine Vielzahl von den einzelnen Übertragungskanälen K1 bis Kn zuteilbaren Speicherbereichen auf. Die Zuteilung erfolgt dabei durch den Mikroprozessor MP wahlfrei. Eine gerade gewählte Zuteilung kann beispielsweise in einem gesonderten Speicherbereich des Schreib-/Lese-Speichers RAM hinterlegt sein.

Nach der Übernahme der von dem Teletex-Endgerät Ttx übertragenen Datensignale in den dem Übertragungskanal K1 gerade zugeteilten Speicherbereich wird die zwischen dem Übertragungskanal K1 und dem Teletex-Endgerät Ttx bestehende Verbindung entsprechend den genannten Signalisierungsprozeduren (CCITT-Empfehlungen X.21 und X.71) abgebaut.

Die im Zuge der zwischen der Fernschreib- und Datenvermittlungsanlage EDS und dem Übertragungskanal K1 bestehenden Verbindung übertragenen Signalisierungsinformationen werden im übrigen von der Schnittstellenschaltung USART2 aufgenommen bzw. abgegeben. Sie erhält hierfür von dem Mikroprozessor MP her entsprechende Steuersignale zugeführt. Mit Hilfe dieser Schnittstellenschaltung werden im wesentlichen die in serieller Form von der Fernschreib- und Datenvermittlungsanlage her abgegebenen Bitgruppen in eine parallele Form umgesetzt, in der sie von dem Mikroprozessor verarbeitet werden. In entsprechender Weise werden die von dem Mikroprozessor her in paralleler Form bereitgestellten Signalisierungsinformationen in serielle Bitgruppen umgesetzt und an die Fernschreib- und Datenvermittlungsanlage abgegeben.

Während der Übertragung von Signalisierungsinformationen ist die Datenweiche MUX von der Datenübertragungsschaltung HDLC her so gesteuert, daß die von der Schnittstellenschaltung USART2 abgegebenen seriellen Bitgruppen zu der Fernschreib- und Datenvermittlungsanlage hin übertragen werden können.

Die Datenübertragungsschaltung ermöglicht eine gesicherte Übertragung der umzusetzenden Datensignale. Für eine gesicherte Übertragung ist hier eine sogenannte HDLC-Prozedur vorgesehen. Die bei dieser Prozedur zusammen mit den Datensignalen übertragenen Sicherungssignale werden in der Datenübertragungsschaltung HDLC überprüft und von den übrigen Datensignalen abgetrennt. Lediglich die Datensignale werden dann in der dargestellten Weise in einen freien Speicherbereich des Schreib-/Lese-Speichers RAM aufgenommen. Das Auftreten von Datensignalen wird dem Mikroprozessor im übrigen an seinem in Frage kommen Unterbrechungseingang (INT1) durch ein von der Datenübertragungsschaltung abgegebenes Unterbrechungssignal signalisiert.

Nach dem Abbau der vorstehend erläuterten Verbindung zwischen der Fernschreib- und Datenvermittlungsanlage und dem Übertragungskanal K1 wird diesem Übertragungskanal für die Übernahme von im Zuge einer weiteren Verbindung zu übertragenden Datensignalen ein weiterer Speicherbereich des Schreib-/Lese-Speichers RAM zugeteilt, welcher bisher noch nicht durch aufgenommene Datensignale belegt ist. Die Auswahl hierfür trifft der Mikroprozessor MP, indem er in dem bereits genannten gesonderten Speicherbereich des Schreib-/Lese-Speichers RAM einen freien Speicherbereich ermittelt und diesen durch einen entsprechenden Eintrag dem Übertragungskanal K1 zuteilt. Nach dieser Zuteilung wird von dem Mikroprozessor MP her ein Freimeldesignal für den Übertragungskanal K1 abgegeben. Dieses Freimeldesignal, das auch Angaben bezüglich des als frei zu meldenden Übertragungskanals enthält, wird zunächst in dem bereits erwähnten Durchlaufspeicher FIFO gespeichert. In diesem Durchlaufspeicher werden auch von den Freimeldesignalen abweichende Meldesignale gespeichert, auf die jedoch erst im folgenden näher eingegangen wird. Hier wird zunächst nur der Fall betrachtet, daß in dem Durchlaufspeicher Freimeldesignale gespeichert sind.

Der Durchlaufspeicher FIFO wird von dem Mikroprozessor MP her in vorgegebenen Zeitabständen für das Auslesen von in ihm gespeicherten Meldesignalen angesteuert. Dabei können z. B. Freimeldesignale für eine beliebige Anzahl von Übertragungskanälen zwischengespeichert sein. Die Anzahl hängt davon ab, wie viele Übertragungskanäle gerade in eine Verbindung mit der Fernschreib- und Datenvermittlungsanlage EDS einbezogen sind. Ausgelesen werden diese Freimeldesignale dann in der Reihenfolge ihres Einschreibens.

Mit jeder Ansteuerung des Durchlaufspeichers FIFO übernimmt der Mikroprozessor MP jeweils ein Freimeldesignal und leitet dieses an die Schnittstellenschaltung USART3 weiter. Diese Schnittstellenschaltung setzt das ihr in praller Form zugeführte Freimeldesignal dann in eine serielle Form um und leitet dieses an die Anschlußschaltung SAGD2 der Fernschreib- und Datenvermittlungsanlage weiter. Auf ein derartiges Freimeldsignal hin wird dann in der Fernschreib- und Datenvermittlungsanlage das für den in Frage kommenden Übertragungskanal gespeicherte Belegtzustandssignal wieder in ein Freizustandssignal geändert. Für den hier betrachteten Fall, daß der Übertragungskanal K1 in eine Verbindung einbezogen ist, bedeutet das, daß dieser Übertragungskanal bei Eintreffen des für ihn abgegebenen Freimeldesignals wieder für eine neue Belegung freigegeben wird. Damit steht dann der Übertragungskanal K1 noch vor der Weiterleitung der über ihn aufgenommenen Datensignale für eine erneute Datensignalaufnahme zur Verfügung.

Für die Weiterleitung der zuvor über den nunmehr freigegebenen Übertragungskanal K1 aufgenommenen Datensignale wird von dem Mikroprozessor MP her versucht, eine Verbindung über die Fernschreib- und Datenvermittlungsanlage EDS zu dem Telex-Endgerät Tx hin aufzubauen. Ist dieses Telex-Endgerät erreichbar, so verläuft die Verbindung über die Schnittstellenschaltung USART1, die wiederum eine Umsetzung der ihr in paralleler Form zugeführten Signale in serielle Signale bzw. ihr in serieller Form zugeführten Signale in parallele Signale vornimmt. Nach dem Aufbau der Verbindung zu dem Telex-Endgerät hin werden dann die für den Übertragungskanal K1 in dem Schreib-/Lese-Speicher RAM gespeicherten Datensignale von dem Mikroprozessor ausgelesen und dabei in von Telex-Endgeräten verarbeitbaren Datensignale umgesetzt. Diese umgesetzten Datensignale werden anschließend über die Schnittstellenschaltung USART1 und die Fernschreib- und Datenvermittlungsanlage EDS zu dem Telex- Endgerät Tx hin übertragen. Nach dieser Übertragung wird dann die bestehende Verbindung in der für Telex-Verbindungen vorgesehenen Weise ausgelöst und der für die Speicherung der übertragenen Datensignale reservierte Speicherbereich des Schreib-/Lese-Speichers wieder freigegeben.

Es kann nun aber auch der Fall eintreten, daß das Telex-Endgerät Tx gerade nicht erreichbar ist, weil es z. B. gerade in eine andere Verbindung einbezogen ist. In diesem Fall wird von dem Mikroprozessor MP her eine vorgegebene Anzahl von Versuchen unternommen, um eine Verbindung zu dem genannten Telex-Endgerät aufzubauen. Ist dies nicht möglich, so gibt der Mikroprozessor MP ein Meldesignal ab, welches zunächst in dem Durchlaufspeicher FIFO eingetragen wird. In diesem Meldesignal sind Angaben bezüglich des Senders der nicht weiterleitbaren Datensignale enthalten. Diese Angaben sind zusammen mit den nicht weiterleitbaren Datensignalen gespeichert.

Ein aufgrund der Nichtweiterleitbarkeit von Datensignalen in den Durchlaufspeicher FIFO eingetragenes Meldesignal durchläuft wie ein Freimeldesignal diesen Durchlaufspeicher. Erkennt der Mikroprozessor MP bei der zyklischen Ansteuerung des Durchlaufspeichers ein Meldesignal, so wird für die Weiterleitung dieses Meldesignals eine über die Fernschreib- und Datenvermittlungsanlage EDS verlaufende Verbindung zu dem Sender der nicht weiterleitbaren Datensignale, hier zu dem Teletex-Endgerät Ttx, aufgebaut, um diesem die Nichtweiterleitbarkeit der von ihm abgegebenen Datensignale zu signalisieren. Gleichzeitig wird der durch die nicht weiterleitbaren Datensignale belegte Speicherbereich des Schreib-/Lese-Speichers RAM der Signalumsetzeinrichtung durch den Mikroprozessor MP wieder freigegeben. Die Freigabe erfolgt dabei durch einen entsprechenden Eintrag in dem bereits oben erwähnten gesonderten Speicherbereich des Schreib-/Lese-Speichers RAM.

Da in einem Teletex-Endgerät im allgemeinen die von diesem abgegebenen Datensignale weiterhin zur Verfügung stehen, kann auf den Empfang eines Meldesignals hin eine erneute Signalübertragung zu der Signalumsetzeinrichtung TTU hin erfolgen.

Die Übertragung eines Meldesignals bei der zu dem Teletex-Endgerät Ttx verlaufenden Verbindung kann im übrigen sowohl während des Verbindungsaufbaus in Form von Dienstsignalen als auch nach dem vollständigen Aufbau der Verbindung in der Datenübertragungsphase erfolgen.

Für die Abgabe eines Meldesignals kann auch anstelle einer zu dem Sender der nicht weiterleitbaren Datensignale verlaufenden Verbindung von der Signalbehandlungseinrichtung her eine über die Fernschreib- und Datenvermittlungsanlage EDS verlaufende Verbindung zu einer zu einem in der Zeichnung nicht dargestellten Überlaufplatz gehörenden Teilnehmerstelle aufgebaut werden. In diesem Fall werden dem Meldesignal auch die umgesetzten jedoch nicht weiterleitbaren Datensignale sowie eine Adresse des Empfängers dieser nicht weiterleitbaren Datensignale angefügt. Im Anschluß daran erfolgt eine Freigabe des bis dahin durch Adressen und nicht weiterleitbare Datensignale belegten Speicherbereiches des Schreib-/Lese-Speichers der Signalbehandlungseinrichtung in der bereits oben angegebenen Weise.

Die zu dem Überlaufplatz gehörende Teilnehmerstelle übernimmt nach der Übernahme der gerade genannten Signale die Weiterleitung der umgesetzten Datensignale an das in Frage kommende Telex-Endgerät.

Die Einbeziehung eines Überlaufplatzes in die Übertragung von Datensignalen ist immer dann vorteilhaft, wenn die zu übertragenden Datensignale nach einer Übertragung in dem Sender, hier einem Teletex-Endgerät, nicht mehr zur Verfügung stehen.

Bisher wurden lediglich die Verfahrensschritte für eine Übertragung von Datensignalen von dem Teletex-Endgerät Ttx zu dem Telex-Endgerät Tx hin erläutert. Den genannten Verfahrensschritten entsprechende Verfahrensschritte sind auch auszuführen, wenn Datensignale in der Gegenrichtung zu übertragen sind. In diesem Fall werden die zu übertragenden Datensignale nach einem entsprechenden Verbindungsaufbau über die Schnittstellenschaltung USART1 des in Frage kommenden Übertragungskanals aufgenommen. Nach einer Umsetzung in von Teletex-Endgeräten verarbeitbare Datensignale erfolgt dann eine Weiterleitung an die zugehörige Datenübertragungsschaltung HDLC der Signalumsetzeinrichtung. Diese Datenübertragungsschaltung fügt den weiterzuleitenden Datensignalen der Datensicherung dienende Signale an und gibt die daraus resultierenden Signale in serieller Form über die Datenweiche MUX an die Fernschreib- und Datenvermittlungsanlage EDS ab. Von hier aus erfolgt dann eine Weiterleitung der Signale an das in Frage kommende Teletex-Endgerät. Die Behandlung nicht weiterleitbarer Datensignale erfolgt in der gerade dargestellten Weise, in dem ein Meldesignal zusammen mit den nicht weiterleitbaren Datensignalen und einer den Empfänger dieser Datensignale bezeichnenden Adresse zu einer Teilnehmerstelle des Überlaufplatzes hin übertragen wird. Die Einbeziehung des Überlaufplatzes in die Übertragung von Datensignalen ist hier ebenfalls vorteilhaft, da bei einer Signalübertragung von einem Telex-Endgerät her die Datensignale im allgemeinen in diesem Endgerät nicht mehr zur Verfügung stehen.

Die vorliegende Erfindung wurde bisher lediglich am Beispiel einer mit der Fernschreib- und Datenvermittlungsanlage EDS verbundenen Signalumsetzeinrichtung TTU erläutert. Aus dem Vorstehenden ergibt sich aber ohne weiteres, daß das Verfahren gemäß der vorliegenden Erfindung auch dann anwendbar ist, wenn anstelle einer Signalumsetzeinrichtung eine allgemein als Signalbehandlungseinrichtung zu bezeichnende Einrichtung in der in der Zeichnung angegebenen Weise an die Fernschreib-und Datenvermittlungsanlage angeschlossen wird. Als Beispiel wurde oben bereits eine Rundsendeeinrichtung genannt. Von einer solchen Rundsendeeinrichtung, in die die an eine Mehrzahl von Empfängern weiterzuleitenden Datensignale zunächst zwischengespeichert werden, wird immer dann ein Meldesignal an den Sender von Datensignalen oder an eine Teilnehmerstelle des Überlaufplatzes abgegeben, wenn mindestens ein Empfänger gerade nicht erreichbar ist. Bei einer Rundsendeeinrichtung kann im übrigen die Behandlung der Datensignale entweder lediglich in einer Verteilung der Datensignale an die in Frage kommenden Empfänger oder in einer Umsetzung mit einer anschließenden Verteilung bestehen.

Bei der in der Zeichnung mit TTU bezeichneten Einrichtung kann es sich aber auch, wie bereits oben erwähnt, um eine Einrichtung für den elektronischen Briefdienst (Mail-Box) handeln. In eine derartige Einrichtung werden Nachrichtensignale (Datensignale) zwischengespeichert, die von Teilnehmerstellen (Endgeräten) der Fernschreib- und Datenvermittlungsanlage EDS abrufbar sind. Werden Nachrichtensignale dabei innerhalb einer vorgegebenen Zeitspanne nicht abgerufen, so kann zu dem Sender der nicht abgerufenen Nachrichtensignale ein Meldesignal in der oben angegebenen Weise übertragen werden.

Vorstehend wurde ausgeführt, daß ein Meldesignal im Zuge einer über die Fernschreib- und Datenvermittlungsanlage EDS verlaufenden Verbindung zu dem Sender der nicht weiterleitbaren Datensignale bzw. zu einer zu einem Überlaufplatz gehörenden Teilnehmerstelle übertragen wird. Das betreffende Meldesignal kann dabei auch ggf. von der Fernschreib- und Datenvermittlungsanlage für die Steuerung vermittlungstechnischer Aufgaben, wie z. B. der Rufdatenerfassung oder der Erfassung von Verkehrsstatistikdaten, ausgewertet werden. Die Fernschreib- und Datenvermittlungsanlage erkennt dabei das Auftreten eines Meldesignals beispielsweise durch Mitlesen von Dienstssignalen oder von in der Datenübertragungsphase übertragenen Signalen, je nachdem, ob Meldesignal in Form von Dienstsignalen während des jeweiligen Verbindungsaufbaus oder während der Datenübertragungsphase übertragen wird.

Bezüglich des Zeitpunktes der Abgabe eines Meldesignals von einer als Signalumsetzeinrichtung oder Rundsendeeinrichtung dienenden Signalbehandlungseinrichtung sei noch darauf hingewiesen, daß zweckmäßigerweise erst nach der Durchführung einer vorgegebenen Anzahl von Versuchen des Weiterleitens von in einem Speicherbereich des Schreib-/Lese-Speichers (Datensignalspeichers) RAM gespeicherten Datensignalen ein Meldesignal von der Signalbehandlungseinrichtung abgegeben wird. Denn bei einer solchen Vorgehensweise kann mit großer Wahrscheinlichkeit davon ausgegangen werden, daß der bzw. die Empfänger zu dem in Frage kommenden Zeitpunkt von der Signalbehandlungseinrichtung her nicht erreichbar ist bzw. sind.

Vorstehend wurde ausschließlich der Fall betrachtet, daß für die Übertragung von Meldesignalen ein von den Übertragungskanälen K1 bis Kn verschiedener Sonderkanal benutzt wird. Dies bringt den Vorteil mit sich, daß die für eine Übertragung von Datensignalen zur Verfügung stehenden Übertragungskanäle für die Abgabe von Meldesignalen nicht in Anspruch genommen werden müssen. Es kann aber auch ein gerade nicht in eine Übertragung von Datensignalen einbezogener Übertragungskanal für die Dauer der Übertragung von Meldesignalen als Sonderkanal benutzt werden. In diesem Fall ist für die Realisierung des Sonderkanals kein zusätzlicher schaltungstechnischer Aufwand erforderlich.

## Patentansprüche

1. Verfahren zum Übertragen von Datensignalen zwischen an einer Datenvermittlungsanlage (EDS) angeschlossenen Teilnehmerstellen (Ttx, Tx) bzw. Übertragungsleitungen und einer ebenfalls an der Datenvermittlungsanlage über eine Mehrzahl von Verbindungsleitungen angeschlossenen Signalbehandlungseinrichtung (TTU) mit einer der Anzahl der Verbindungsleitungen entsprechenden Anzahl von Übertragungskanälen (K1 bis Kn), wobei die über einen der betreffenden Übertragungskanäle zu der Signalbehandlungseinrichtung hin übertragenen zu behandelnden Datensignale in einen für die Aufnahme von Datensignalen dem betreffenden Übertragungskanal gerade zugeordneten Speicherbereich eines eine Mehrzahl von den Übertragungskanälen wahlfrei zuteilbaren Speicherbereichen aufweisenden Datensignalspeichers (RAM) übernommen werden und nach dieser Übernahme dem betreffenden Übertragungskanal (z. B. K1) für eine erneute Übernahme zu behandelnder Datensignale ein weiterer Speicherbereich zugeteilt wird und wobei zunächst in einem Speicherbereich des Datensignalspeichers zwischengespeicherte Datensignale nach einer Behandlung über mindestens einen Übertragungskanal weitergeleitet werden, dadurch gekennzeichnet, daß von der Signalbehandlungseinrichtung (TTU) her über einen für sämtliche Übertragungskanäle zur Verfügung stehenden Sonderkanal ein Meldesignal zu der Datenvermittlungsanlage (EDS) hin übertragen wird, falls in einem Speicherbereich des Datensignalspeichers gespeicherte Datensignale nicht weitergeleitet werden können und daß mit der Abgabe des Meldesignals der bis dahin durch die nicht weiterleitbaren Datensignale belegte Speicherbereich freigegeben wird.

2. Verfahren nach Anspruch 1, dadurch gekennzeichnet, daß für die Abgabe eines Meldesignals von der Signalbehandlungseinrichtung her über den Sonderkanal eine gesonderte Verbindung zu der Datenvermittlungsanlage (EDS) hin aufgebaut wird.

3. Verfahren nach Anspruch 2, dadurch gekennzeichnet, daß für die Abgabe eines Meldesignals von der Signalbehandlungseinrichtung (TTU) her über den Sonderkanal eine über die Datenvermittlungsanlage (EDS) verlaufende gesonderte Verbindung zu einer zu einem Überlaufplatz gehörenden Teilnehmerstelle aufgebaut wird und daß dem Meldesignal die dieses Meldesignal bewirkenden nicht weiterleitbaren Datensignale sowie eine spätere Weiterleitung dieser Datensignale durch die zu dem Überlaufplatz gehörende Teilnehmerstelle ermöglichende Informationssignale beigefügt werden.

4. Verfahren nach Anspruch 2, dadurch gekennzeichnet, daß für die Abgabe eines Meldesignals von der Signalbehandlungseinrichtung (TTU) her über den Sonderkanal eine über die Datenvermittlungsanlage (EDS) verlaufende gesonderte Verbindung zu derjenigen Teilnehmerstelle bzw. Übertragungsleitung hin aufgebaut wird, von der die zu behandelnden Datensignale ursprünglich abgegeben worden sind.

5. Verfahren nach einem der Ansprüche 2 bis 4, dadurch gekennzeichnet, daß das Meldesignal während der Datenübertragungsphase der Verbindung übertragen wird.

6. Verfahren nach einem der Ansprüche 2 bis 4, dadurch gekennzeichnet, daß das Meldesignal im Zuge des Verbindungsaufbaus in Form von Dienstsignalen übertragen wird.

7. Verfahren nach einem der Ansprüche 1 bis 6, dadurch gekennzeichnet, daß erst nach der Durchführung einer vorgegebenen Anzahl von Versuchen des Weiterleitens von in einem Speicherbereich des Datensignalspeichers (RAM) gespeicherten Datensignalen ein Meldesignal von der Signalbehandlungseinrichtung (TTU) abgegeben wird.

## Claims

1. Method for transmitting data signals between subscriber stations (Ttx, Tx) or transmission lines connected to a data exchange (EDS) and a signal handling device (TTU), likewise connected to the data exchange via a plurality of connecting lines, with a number of transmission channels (K1 to Kn) corresponding to the number of connecting lines, the data signals to be handled transmitted via one of the transmission channels in question to the signal handling device being transferred into a memory area, just assigned to the transmission channel in question for receiving data signals, of a data signal memory (RAM) having a plurality of memory areas freely assignable by the transmission channels, and, after this transfer, a further memory area being assigned to the transmission channel (e.g. K1) in question for a renewed transfer of data signals to be handled, and data signals temporarily stored at first in a memory area of the data signal memory being forwarded after handling via at least one transmission channel, characterized in that an indication signal is transmitted to the data exchange (EDS) from the signal handling device (TTU) via a separate channel available to all transmission channels if in one memory area of the data signal memory stored data signals cannot be forwarded, and in that, with the output of the indication signal, the memory area hitherto occupied by the data signals which cannot be forwarded is released.

2. Method according to Claim 1, characterized in that a separate connection is established from the signal handling device via the separate channel to the data exchange (EDS) for the output of an indication signal.

3. Method according to Claim 2, characterized in that, for the output of an indication signal, a separate connection extending via the data exchange (EDS) is established from the signal handling device (TTU) via the separate channel to a subscriber station belonging to an overflow location, and in that there are added to the indication signal the data signals which cannot be forwarded and which trigger said indication signal as well as information signals which permit a further forwarding of said data signals by the subscriber station belonging to the overflow location.

4. Method according to Claim 2, characterized in that, for the output of an indication signal, a separate connection extending via the data exchange (EDS) is established from the signal handling device (TTU) via the separate channel to the respective subscriber station or transmission line from which the data signals to be handled were originally output.

5. Method according to one of Claims 2 to 4, characterized in that the indication signal is transmitted during the data transmission phase of the connection.

6. Method according to one of Claims 2 to 4, characterized in that the indication signal is transmitted in the form of service signals in the course of establishing the connection.

7. Method according to one of Claims 1 to 6, characterized in that an indication signal is output by the signal handling device (TTU) only after the execution of a predetermined number of attempts at forwarding data signals stored in a memory area of the data signal memory (RAM).

## Revendications

1. Procédé pour transmettre des signaux de données entre des postes d'abonnés (Ttx, Tx) ou des liaisons de transmission, raccordés à une installation (EDS) de commutation de données, et un dispositif (TTU) de traitement de signaux, raccordé également à l'installation de commutation de données par l'intermédiaire d'une multiplicité de lignes de jonction, comportant un nombre de canaux de transmission (K1 à Kn) correspondant au nombre des lignes de jonction, et selon lequel les signaux de données devant être traités, qui sont transmis par l'intermédiaire de l'un des canaux de transmission considérés au dispositif de traitement de signaux, sont transférés dans une zone, qui est affectée précisément au canal de transmission considéré pour la réception de signaux de données, d'une mémoire de signaux de données (RAM) comportant une multiplicité de zones de mémoire pouvant être affectées librement aux canaux de transmission, et, après ce transfert, une autre zone de mémoire est affectée au canal de transmission considéré (par exemple K1) pour un nouveau transfert de signaux de données devant être traités, et selon lequel tout d'abord des signaux de données mémorisés temporairement dans une zone de la mémoire de signaux de données sont retransmis par l'intermédiaire d'au moins un canal de transmission, caractérisé par le fait qu'un signal de signalisation est transmis à l'installation (EDS) de commutation de données par l'intermédiaire d'un canal particulier disponible pour tous les canaux de transmission, à partir du dispositif (TTU) de traitement des signaux, dans le cas où des signaux de données mémorisés dans une zone de la mémoire de signaux de données ne peuvent pas être retransmis, et que, lors de la délivrance du signal de signalisation, la zone de mémoire occupée jusqu'alors par les signaux de données ne pouvant pas être retransmis, est libérée.

2. Procédé suivant la revendication 1, caractérisé par le fait que pour la délivrance d'un signal de signalisation, une liaison particulière est établie avec l'installation (EDS) de commutation de données, par l'intermédiaire du canal particulier, à partir du dispositif de traitement des signaux.

3. Procédé suivant la revendication 2, caractérisé par le fait que pour la délivrance d'un signal de signalisation, une liaison particulière passant par l'installation (EDS) de commutation de données est établie avec un poste d'abonné faisant partie d'une zone en dépassement de capacité, par l'intermédiaire du canal particulier, à partir du dispositif (TTU) de traitement de signaux et qu'au signal de signalisation sont ajoutés les signaux de données, qui ne peuvent pas être retransmis et déclenchent le signal de signalisation, ainsi que des signaux d'information permettant une retransmission ultérieure de ces signaux de données par le poste d'abonné faisant partie de la zone en déplacement de capacité.

4. Procédé suivant la revendication 2, caractérisé par le fait que pour la délivrance d'un signal de signalisation, une liaison particulière passant par l'installation (EDS) de commutation de données est établie par l'intermédiaire du canal particulier, à partir du dispositif (TTU) de traitement de signaux, avec le poste d'abonné ou la ligne de transmission, d'où les signaux de données devant être traités ont été délivrés à l'origine.

5. Procédé suivant l'une des revendications 2 à 4, caractérisé par le fait que le signal de signalisation est transmis pendant la phase de transmission de données de la liaison.

6. Procédé suivant l'une des revendications 2 à 4, caractérisé par le fait que le signal de signalisation est transmis sous la forme de signaux de service au cours de l'établissement de la liaison.

7. Procédé suivant l'une des revendications 1 à 6, caractérisé par le fait que c'est seulement après l'exécution d'un nombre prédéterminé d'essais de retransmission de signaux de données mémorisés dans une zone de la mémoire (RAM) de signaux de données, qu'un signal de signalisation est délivré par le dispositif (TTU) de traitement de signaux.

EP 0 192 069 B1